# EUROPÄISCHE PATENTANMELDUNG

(11) **EP 0 947 535 A2**
(43) Veröffentlichungstag der Anmeldung: **06.10.1999**
(21) Anmeldenummer: 99105730.8
(22) Anmeldetag: 22.03.1999
(51) Int. Cl.: C08G 69/06, C08G 73/10, C11D 3/37

(54) **Verfahren zur Herstellung von Polymeren mit wiederkehrenden Succinyleinheiten unter Verwendung von Katalysatoren**

(30) Priorität: 03.04.1998 DE 19815025
(71) Anmelder: BAYER AG, 51368 Leverkusen (DE)
(72) Erfinder: Schubart, Rüdiger, Dr., 51467 Bergisch Gladbach (DE); Weider, Richard, Dr., Longmeadow, MA 01106 (US)

(57) **Zusammenfassung**

Die Erfindung betrifft ein Verfahren zur Herstellung von Polymeren mit wiederkehrenden Succinyleinheiten, insbesondere Polysuccinimid und Polyasparaginsäure mit erhöhten MW-Werten bei nicht erhöhten, moderaten Synthesetemperaturen und gleichzeitig nicht erhöhten Polykondensationszeiten unter Verwendung von Maleinsäureanhydrid und Ammoniumcarbonat sowie eines Katalysators.

## Beschreibung

Die Erfindung betrifft ein Verfahren zur Herstellung Von Polymeren mit wiederkehrenden Succinyleinheiten, insbesondere von Polyasparaginsäure (PAS) und Polysuccinimid (PSI).

Die Herstellung und Verwendung von Polysuccinimid und Polyasparaginsäure und ihrer Derivate ist seit langem Gegenstand Zahlreicher Veröffentlichungen und Patente.

US-A 4 839 461 (= EP-A 0 256 366) beschreibt die Herstellung von Polvasparaginsäure aus Maleinsäureanhydrid, Wasser und Ammoniak. Dabei wird Maleinsäureanhydrid im wäßrigen Medium unter Zugabe von konzentrierter Ammoniaklösung umgesetzt und anschließend polymerisiert. Während dieser Polymerisation wird die Masse zunächst hochviskos und anschließend fest-porös, was ein verfabrenstechnisch aufwendiges Handling erfordert.

US-A 5 296 578 beschreibt die Herstellung von PSI aus Maleinsäureanhydrid, Wasser und Ammoniak. Maleinsäureanhydrid wird in Wasser zu Maleinsäure hydrolysiert und anschließend mit konzentrierter Ammoniaklösung in das Ammoniumsalz überführt. In einem Rührreaktor wird das Wasser aus der Lösung verdampft und anschließend das Monoammoniumsalz in Masse bei Temperaturen oberhalb von 170°C zu PSI polymerisiert. Hierbei wird die Masse in mehreren Stunden über hochviskose Phasenzustände hinweg zum festen PSI umgesetzt und anschließend zu PAS hydrolysiert.

US-A 5 288 783 beschreibt die Herstellung von PAS aus Maleinsäure oder Fumarsäure, Wasser und Ammoniak. Dabei wird Maleinsäureanhydrid mit Wasser im Rührkessel vermischt und unter Kühlen zu Maleinsäure umgesetzt. Durch Zugabe von konzentrierter Ammoniaklösung wird das Maleinsäuremonommoniumnsalz hergestellt. Anschließend wird das enthaltene Wasser verdampft und das trockene Monoammoniumsalz bei Temperaturen von 190 bis 350°C polymerisiert. Alternativ wird vorgeschlagen, das in wäßriger Lösung vorliegende Monoammoniumsalz bei Temperaturen von 160 bis 200°C durch Extrusion zu PSI weiter zu verarbeiten. Das auf einem der beiden Verfahrenswege hergestellte PSI wird anschließend alkalisch zu PAS hydrolysiert.

EP-A 593 187 beschreibt die Herstellung von PSI durch thermische Polymerisation von Maleinamidsäure bei Temperaturen von 160 bis 330°C bei einer Reaktionsdauer von 2 Minuten bis 6 Stunden. Es wird auch auf die Polykondensation im Lösungsmittel unter Verwendung von Kondensationshilfsmitteln hingewiesen.

DE-A 4 023 463 (US-A 5 142 062) beschreibt ein Verfahren zur Herstellung von Polysuccinimid in Gegenwart von Phosphorsäuren. DE-A 4 221 875 (= WO 94/01486) beschreibt die Herstellung von sogenannten modifizierten Polyasparaginsäuren durch Polykondensation von Asparaginsäure mit weiteren Verbindungen, gegebenenfalls in Gegenwart von Phosphorsäuren oder Derivaten davon. Aus WO 95/02007 ist bekannt, Polymerisate der Asparaginsäure durch Erhitzen von Maleinsäureanhydrid und Säurederivaten des Ammoniaks herzustellen. Als Säure wird u.a. Phosphorsäure angegeben. Von den entsprechenden Salzen werden aber lediglich Diammoniumhydrogenphosphat und Monoammoniumdihydrogenphosphat erwähnt. Aus EP-A 604 813 (DE-A 4 244 031) ist ein Verfahren zur Herstellung von Polysuccinimid und Polyasparaginsäure aus Maleinamidsäure bekannt, bei dem man Maleinsäureanhydrid und Ammoniak zu Maleinamidsäure umsetzt und die Maleinamidsäure einer Polymerisation unterwirft, die in Gegenwart von Phosphorsäuren und Polyphosphorsalzen durchgeführt werden kann.

In WO 96/34908 wird ein Verfahren zur Herstellung von Polymeren mit wiederkehrenden Succinyleinheiten, insbesondere Polysuccinimid und Polyasparaginsäure unter Verwendung von Triammoniumsalzen, insbesondere Triammoniumphosphaten beschrieben. Gemäß Beispiel 1 erhält man bei 180°C und 2 h 45 min Reaktionszeit 95 g Polysuccinimid (PSI) mit einem Molekulargewicht von 2580; in Beispiel 2 werden bei 240°C und 2 h 50 min Reaktionszeit 99 g PSI mit MW 2550 erhalten; in Beispiel 3 werden bei 240°C und 4 h 40 min 88 g PSI mit MW 2096 erhalten und in Beispiel 4 bei Temperaturen von 200°C über 5 h 104 g PSI mit MW 5858 erhalten. In Beispiel 5 werden unter denselben Bedingungen wie in Beispiel 4 jedoch unter Zusatz von 10 g Diammoniumphosphat PSI mit MW 4566 erhalten.

DE 4 322 410 zeigt außerdem den Syntheseweg zu PSI bzw. PAS über die Umsetzung von Maleinsäureanhydrid mit Ammoniumcarbonat unter Erwärmung auf.

Nachteilig an den bekannten Verfahren ist, daß sie je nach Reaktionsbedingungen, wie Reaktionszeit und Temperatur, zu sehr unterschiedlichem PSI mit variierenden mittleren Molekulargewichten und von daher zu Produkten mit unbefriedigender Abbaubarkeit führen.

Der vorliegenden Erfindung liegt daher die Aufgabe zugrunde, ein verbessertes Verfahren zur Herstellung von Polymeren mit wiederkehrenden Succinyleinheiten, insbesondere von Polysuccinimid und Polyasparaginsäure mit erhöhten M_{w}-Werten bei nicht erhöhten, moderaten Synthesetemperaturen und gleichzeitig nicht erhöhten Polykondensationszeiten zur Verfügung zu stellen.

Die Aufgabe wurde dadurch gelöst, daß man das Derivat einer gegebenenfalls substituierten 1,4-Butandicarbonsäure oder Butendicarbonsäure, bevorzugt dessen Anhydride, besonders bevorzugt Maleinsäureanhydrid, mit Ammoniumcarbonat in der Schmelze gegebenenfalls zusammen mit einem Katalysator bei 60 bis 100°C, vorzugsweise in Gegenwart von Kristallwasser, miteinander vermischt und die Temperatur zur Vorreaktion auf wenigstens 120 bis 145°C und für die Polymerisation die Temperatur bis 300°C, vorzugsweise 250°C und besonders bevorzugt auf 160 bis 200°C steigert und gleichzeitig das Reaktionswasser entfernt.

In einer bevorzugten Ausführungsform wird der Katalysator erst nach der Vorreaktion bei etwa 130°C zugegeben.

Der Begriff Polykondensation bedeutet dabei für die Zwecke der vorliegenden Erfindung keine Einschränkung auf ein bestimmtes Verfahren zur Herstellung höhermolekularer Stoffe. Polymerisationen im weitesten Sinne sind ebenfalls gemeint.

Die erfindungsgemäß hergestellten Polymere weisen vorzugsweise wiederkehrende Succinyl-Einheiten mit wenigstens einer der folgenden Strukturen auf 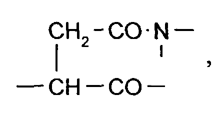 bevorzugt

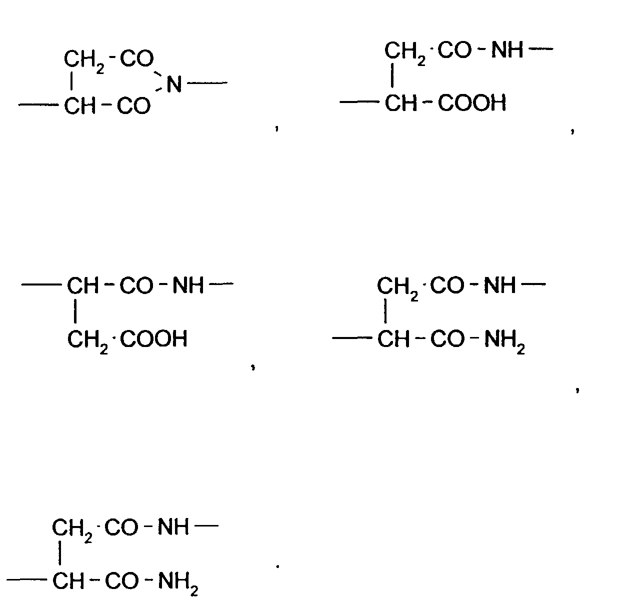

Weiterhin können je nach Ausführungsform Iminodisuccinateinheiten, vorzugsweise wenigstens eine der folgenden Strukturen, enthalten sein: 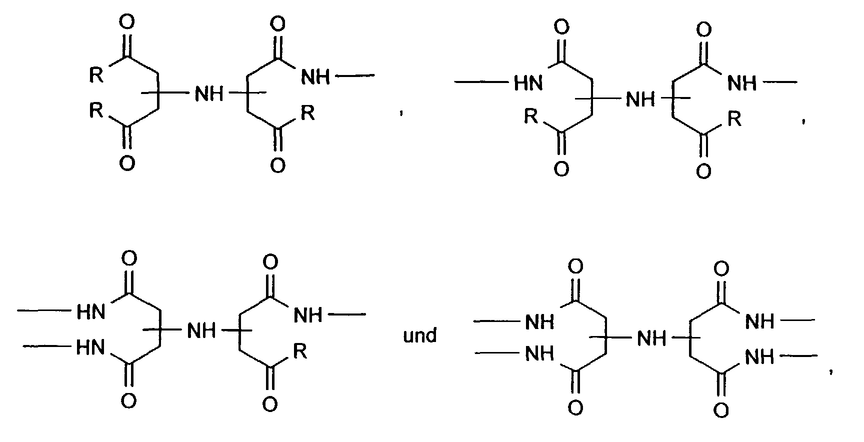 wobei
- R: jeweils für OH, O⁻NH₄⁺ oder NH₂ steht.

Die Iminodisuccinateinheiten können im Polymer statistisch verteilt oder bevorzugt als Endgruppe vorliegen. Bezogen auf die Summe aller wiederkehrenden Einheiten liegt die Iminodisuccinateinheit gegebenenfalls zu wenigstens 0,1 Mol-% vor. Das molare Verhältnis der im Polymer eingebauten Iminodisuccinateinheiten zur Summe aller im Polymer eingebauten Monomereinheiten beträgt vorzugsweise 0,1 Mol-% bis 99 Mol-%, bevorzugt 1 Mol-% bis 50 Mol-%, besonders bevorzugt 2 Mol-% bis 25 Mol-%.

Zusätzlich können durch geeignete Reaktionsführung und Wahl der Edukte weitere wiederkehrende Einheiten enthalten sein, z.B.

### a) Äpfelsäure-Einheiten der Formel

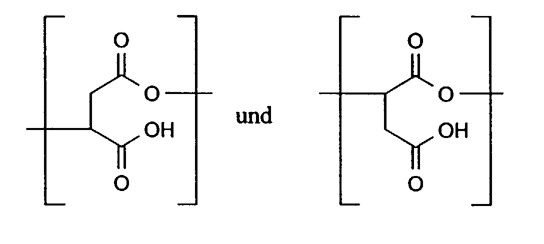

### b) Maleinsäure- und Fumarsäure-Einheiten der Formel

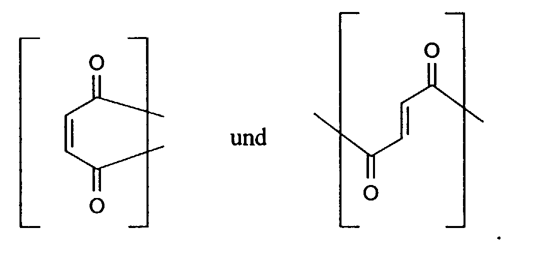

In einer bevorzugten Ausführungsform werden Maleinsäureanhydrid, Maleinsäure, Maleinsäurederivate, z.B. Maleinsäureester und Maleinsäurehalbester, Fumarsäure oder Fumarsäurederivate eingesetzt. Besonders bevorzugt ist Maleinsäure und Maleinsäureanhydrid. Anstelle von Maleinsäureanhydrid und Ammoniumcarbonat können auch direkt Maleinsäureamid oder Maleinsäureammoniumsalz eingesetzt werden.

Bevorzugte Maleinsäureester oder -halbester sind die -methyl- oder -ethylester.

In einer bevorzugten Ausführungsform wird bei diesem Syntheseverfahren Ammoniumcarbonat oder Ammoniumhydrogencarbonat mit der gegebenenfalls substituierten Dicarbonsäure in Gegenwart von Katalysatoren umgesetzt. Besonders bevorzugt ist hierbei, wenn auf 1 Mol Maleinsäureanhydrid oder gegebenenfalls substituierte Dicarbonsäure oder Gemischen davon 0,45 bis 0,8 Mol Ammoniumcarbonat, insbesondere 0,45 bis 0,6 Mol und besonders 0,45 bis 0,55 Mol und ein Katalysator in einer Menge von 0,01 bis 20 g, bevorzugt 0,5 bis 10 g und besonders bevorzugt 1 bis 5 g pro Mol Maleinsäureanhydrid verwendet wird.

In einer ganz bevorzugten Ausführungsform der Erfindung wird Maleinsäureanhydrid mit Ammoniumcarbonat im Verhältnis 1:0,5, vorzugsweise ohne Lösungsmittel, vermischt wobei dann bei etwa 60 bis 100°C in Gegenwart von Kristallwasser beide Verbindungen miteinander verschmolzen werden. Anschließend wird die Temperatur der Mischung auf 115 bis 145°C, bevorzugt 120 bis 140°C und besonders bevorzugt 125 bis 135°C gesteigert und bei dieser Temperatur belassen, bis die Gasentwicklung zu Ende ist. Dann fügt man den Katalysator in der angegebenen Menge zu und steigert die Temperatur zur Erzielung der Polykondensation auf etwa 160 bis 200°C, unter Abzug von Wasser, beispielsweise durch Destillation. Weiteres Wasser kann insbesondere durch Anlegen von Vakuum abgezogen werden.

Das gemäß dem erfindungsgemäßen Verfahren erhaltene Polymerisationsprodukt weist mittlere Molmassen von 1600 bis 3800, bevorzugt 2000 bis 3400, insbesondere bevorzugt 2100 bis 3300 auf.

Das erhaltene Polymerisationsprodukt, welches Polysuccinimideinheiten enthält, kann in üblicher Weise zu Polyasparaginsäure und deren Salzen hydrolysiert werden.

Als Katalysatoren lassen sich Säuren, vor allem die des Phosphors also Phosphor- und Polyphosphorsäuren, phosphorige Säure, Phosphonsäuren, Phosphinsäuren, Sulfon- und Sulfinsäuren oder auch sauerdotierte Trägermaterialien wie Aluminium-oxid, verschiedene Kieselsäuren und Titanoxide verwenden. Diese Trägermaterialien können aber auch alleine eingesetzt werden.

Der Einfluß des Katalysators aufdie Polykondensation ist aus der Tabelle anhand der Katalysatormenge und der daraus resultierenden Änderung des M_{w}-Wertes zu ersehen.

Tabelle 1 zeigt die Resultate folgender Umsetzung:

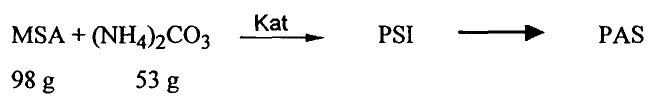

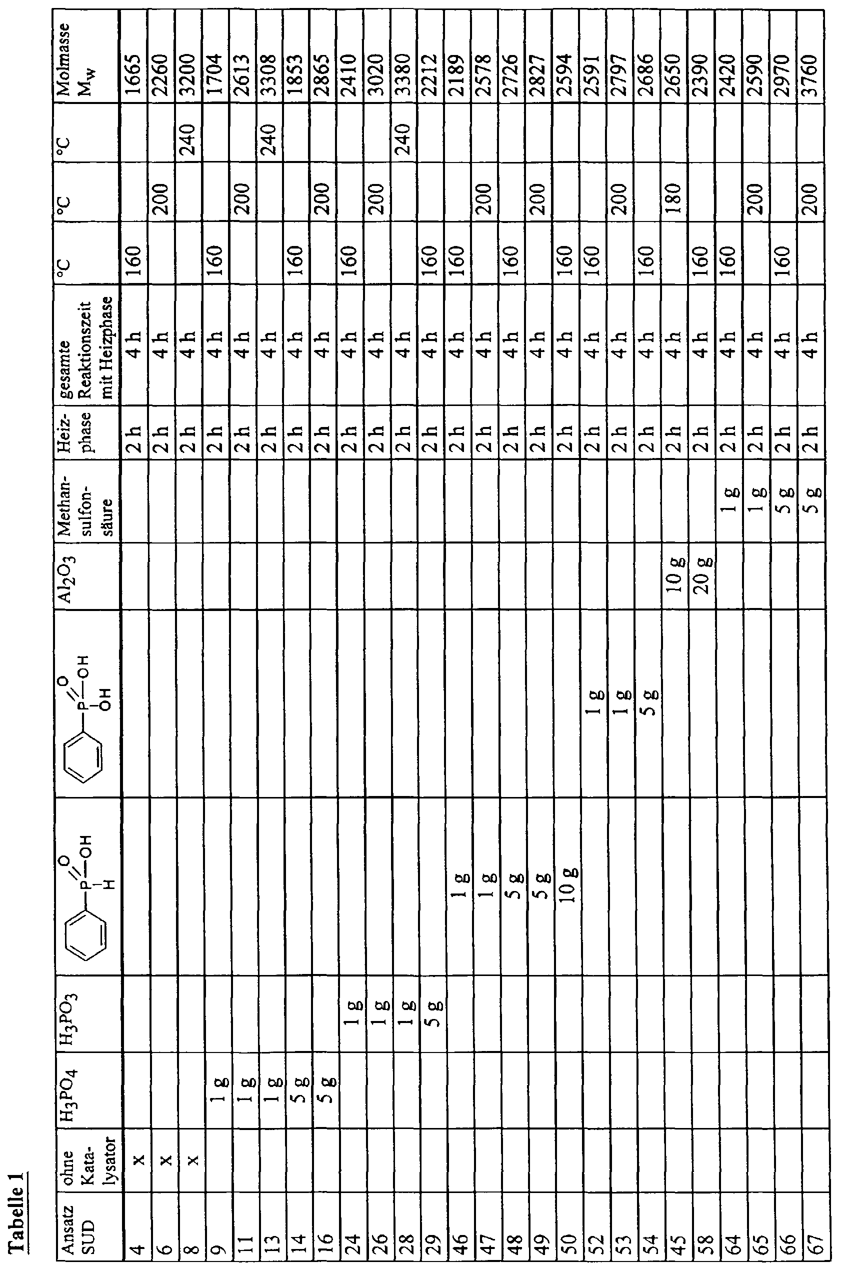

Eine weitere Variante der Molgewichtsbeeinflussung des Wertes M_{w} besteht darin, anstelle der Komponenten MSA und Ammoniumcarbonat, das Ammoniumsalze der Maleinsäure einzusetzen. Nach dem Schema - zunächst ohne zusätzlichen Katalysator - 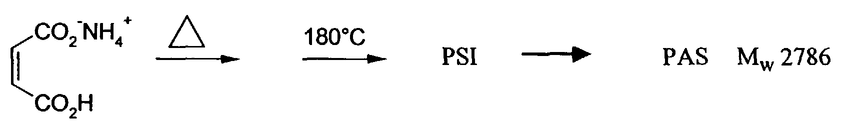 erhält man einen M_{w}-Wert von 2786. Setzt man nach der Vorreaktion noch Methansulfonsäure zu und kondensiert dann ebenfalls bei 180°C zu Ende, so fällt der M_{w}-Wert deutlich höher bei M_{w} 3050 aus.

In einer weiteren Variante wird anstelle des Ammoniumsalzes das Maleinsäuremonoamid eingesetzt. Hier erhält man unter den gleichen Bedingungen wie oben jedoch einen anderen M_{w}-Wert von 2400 ohne Katalysator.

Wird nach der Vorreaktion jedoch phosphorige Säure oder Methansulfonsäure zugefügt, so fällt M_{w} nach der Kondensation bis 180°C mit M_{w} bei 2970 und M_{w} bei 3120 ebenfalls deutlich höher aus.

Dazu folgendes Reaktionsschema:

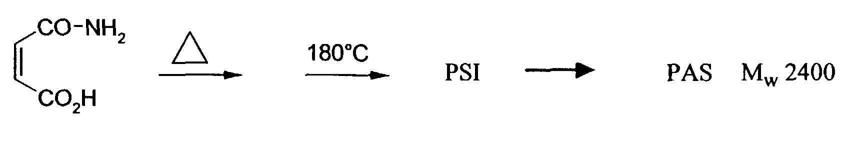

Im Falle des Maleinsäuremonoamides kann das stufenweise Aufheizen auf ∼120°C und Zugabe des Katalysators und dann Weiterheizen bis 180°C zur völligen Kondensation umgestellt werden und der Katalysator von Anfang an zugegeben werden.

Hinsichtlich weiterer Ausführungsvarianten sind insbesondere folgende Verfahren und Vorrichtungen bevorzugt:

Die Edukte können einzeln oder in Gemischen, in Substanz oder in Lösung, eingesetzt werden. Maleinsäureanhydrid (MSA) wird in einer bevorzugten Ausführungsform als Schmelze eingesetzt.

Die Umsetzung der Edukte kann gegebenenfalls in Gegenwart eines Lösungsmittels durchgeführt werden. Als Lösungsmittel geeignet sind Wasser, niedere Alkohole, polar aprotische Lösungsmittel, wie Dimethylformamid, Formamid und Harnstoffe, N-Alkylpyrrolidon, Sulfolan, Aceton, Dimethylsulfoxid, Polyalkylenglykole, Polyalkylenglykolmonoalkylether und Polyalkylenglykoldialkylether. Ebenfalls geeignet sind überkritische Gase, wie z.B. Kohlendioxid und Ammoniak. Besonders geeignet ist Wasser oder/und Formamid.

Die thermische Polymerisation wird im allgemeinen bei Temperaturen zwischen 100°C und 300°C, bevorzugt zwischen 120°C und 250°C, besonders bevorzugt zwisehen 140°C und 200°C, durchgeführt. Die Verweilzeit beträgt dabei vorzugsweise zwischen 1 Sekunde und 600 Minuten, bevorzugt zwischen 5 Sekunden und 240 Minuten, besonders bevorzugt zwischen 10 Sekunden und 150 Minuten.

Ein weiteres Verfahren zur Herstellung der erfindungsgemäßen Polymeren besteht aus folgenden Schritten:
a) Beide Edukte werden mit dem Katalysator vermischt, gegebenenfalls in Gegenwart eines Fluidisierungsmittels und auch gegebenenfalls unter Zusatz eines Comonomeren und gegebenenfalls durch Erwärmen unter Schmelzen langsam auf 120 bis 145°C gebracht.
b) Beide Edukte werden ohne Katalysator vermischt, gegebenenfalls in Gegenwart eines Fluidisierungsmittels und auch gegebenenfalls unter Zusatz eines Comonomeren und gegebenenfalls durch Erwärmen unter Schmelzen langsam auf 120 bis 145°C gebracht.
c) Das aus a) bzw. b) in situ erhaltene Reaktionsgemisch wird dann kontinuierlich oder diskontinuierlich in einem geeigneten Reaktor bei Temperaturen zwischen 120 und 145°C im Falle von b) noch mit der geeigneten Katalysatormenge vermischt und durch weitere Temperatursteigerung zur Polykondensation gebracht. Die Kondensationstemperaturen liegen in einem Bereich von 145 bis 300°C. Bevorzugt sind 145 bis 250°C und besonders bevorzugt sind 145 bis 200°C mit Verweilzeiten von 1 Sekunde bis 600 Minuten, besonders bevorzugt 5 Sekunden bis 240 Minuten und ganz besonders bevorzugt 10 Sekunden bis 150 Minuten.
d) Gegebenenfalls kann zum Ende der Polymerisation weiteres MSA oder weitere Maleinsäure und eine Base zudosiert werden. Geeignete Basen sind Alkali- und Erdalkalihydroxide oder Carbonate wie beispielsweise Natronlauge, Kalilauge, Soda oder Kaliumcarbonat, Ammoniak und Amine wie Triethanolamin, Diethylamin, Diethanolamin, Alkylamine etc.

Eine bevorzugte Ausführungsform des oben beschriebenen allgemeinen Verfahrens ist dadurch gekennzeichnet, daß die Reaktion der Edukte in Gegenwart eines Katalysators im ersten Reaktionsschritt weitgehend adiabatisch erfolgt und die dabei freiwerdende Reaktionswärme eingesetzt wird, um das Reaktionsgemisch mit dem Katalysator auf Polymerisationstemperatur zu bringen und im zweiten Reaktionsschritt das N-haltige niedermolekulare Derivat unter Erhalt eines Polymeren mit wiederkehrenden Succinyl-Einheiten zumindest teilweise zu polymerisieren.

Geeignete Vorrichtungen zur genügend schnellen Vermischung zweier Flüssigströme sind aus vielen Literaturangaben und Patenten bekannt (z.B. Ullmann: Encyclopedia of Industrial Chemistry, 1982, Vol. B2, Chap. 25; Vol. B4, 561-586; Perry's Chemical Engineers' Handbook, 6. ed. (1984), Mc-Graw-Hill, N.Y., 21-61; M.H. Pohl, E. Muschelknautz, Chem. Ing. Tech. 51 (1979), 347 - 364; Chem. Ing. Tech. 52 (1980), 295 - 291).

Bevorzugte Vorrichtungen zur schnellen Vermischung der Eduktströme sind alle Arten von Strahlmischem, statischen Mischern und dynamischen Mischern. Besonders bevorzugte Vorrichtungen zur schnellen Vermischung der Edukte und zum Starten der exothermen Reaktion stellen Strahlmischer dar, deren weitere Vorteile bei der hermetischen Dichtheit, der variabel einstellbaren Mischenergie und der globalen plug-flow-Charakteristik liegen.

In einer bevorzugten Ausführungsform werden die Edukte bei der Durchführung des 1. Reaktionsschrittes zur Verminderung von unerwünschten Nebenreaktionen in einem schnell vermischenden Apparat der o.g. Bauart gemischt und parallel bzw. danach die exotherme Bildung der Zwischenprodukte durchgeführt. Die dabei freiwerdende Wärme wird in dem Edukt-Zwischenprodukt-Gemisch im wesentlichen gespeichert. Dadurch wird das Reaktionsgemisch auf Polymerisationstemperatur gebracht und gegebenenfalls das organische Lösungsmittel oder das Wasser sowie bei der Reaktion entstehendes Wasser ganz oder zumindest teilweise verdampft. In einer besonders bevorzugten Ausführungsform erfolgt die Mischung in < 2 s und die exotherme Bildung der Zwischenprodukte in weniger als 60 s. Das aus der ersten Reaktionsstufe austretende Reaktionsgemisch wird anschließend in einem geeigneten Apparat zur Polymerisation gebracht.

Für die thermische Polymerisation eignen sich grundsätzlich alle Apparate, die bei einer engen Verweilzeitverteilung der viskos-flüssigen Phase die notwendige Mindestverweilzeit zur Polymerisation und gleichzeitig eine zumindest partielle Verdampfung des Lösungsmittels, insbesondere des Wassers, sowie des bei der Reaktion gebildeten Wassers ermöglichen.

Bevorzugte Vorrichtungen zur thermischen Polymerisation sind also alle Apparate, die eine definierte Verweilzeit mit einer engen Verweilzeitverteilung für die feste oder hochviskosflüssige Phase aufweisen und gleichzeitig eine gute Temperierung durch ein zumindest partielles Verdampfen des Lösungsmittels (org. Lösungsmittel und/oder Wasser) und/oder des bei der Polymerisation gebildeten Reaktionswassers ermöglichen. Solche bevorzugten Vorrichtungen können beispielsweise sein
a) Verweilrohre
b) Hochviskosreaktoren (z. B. Schnecke, List-Reaktor, Buss-Reaktor)
c) Trockner (z.B. Schaufeltrockner, Sprühtrockner, Tellertrockner, Bandtrockner)
d) Rührkesselkaskade
e) Dünnschichtverdampfer.
f) Mehrphasen-Wendelrohr-Reaktoren
   (DT 1 667 051)

In einer weiteren Variante des erfindungsgemäßen Verfahrens kann eine Eduktkomponente an mehreren Stellen in geeigneter Weise entlang eines Rohr- bzw. Mehrphasenwendelrohrreaktors eindosiert werden, so daß ein optimales Temperaturprofil erzielt werden kann. Dadurch wird vermieden, daß es zum Auftreten von zu hohen Temperaturen kommt, die zu Produktschädigungen führen können. Die Anzahl der zusätzlichen (ohne die Dosierung in die Mischdüse am Rohr- bzw. Mehrphasenwendelrohrreaktoreintritt) Dosierstellen liegt bevorzugt im Bereich von bis zu 10. Die Art der Zuspeisung wird so gewählt, daß eine gute Vermischung mit der Reaktionslösung erfolgt.

Die Dosierstellen dienen auch dazu, die gegebenenfalls zuzusetzenden Comonomeren (C) zuzuführen. Unter C werden z.B. Aminosäuren wie Glyzin etc. verstanden.

Gleichzeitig kann die letzte Dosierstelle, die kurz vor dem Reaktorausgang liegt, dazu benutzt werden, eine der oben genannten Basen und gegebenenfalls weiteres Edukt A zuzugeben, um eine Pfropfung des Polymeren mit Iminodisuccinateinheiten zu erreichen.

Die Vermischung der Edukte kann je nach den verwendeten Edukten bei Temperaturen zwischen 0°C und 200°C erfolgen. Die exotherme adiabatische Reaktion des ersten Reaktionsschritts liefert dann genügend Wärme, so daß der zweite Reaktionsschritt dann je nach Art und Konzentration der verwendeten Edukte bei 100 bis 350°C, bevorzugt bei 120 bis 260°C und besonders bevorzugt bei 140 bis 240°C stattfinden kann. Vorteilhaft wird die Temperatur über den Druck im Reaktor und die Mengenströme der zugeführten Edukte (A, B), sowie den Gehalt an organischem Lösungsmittel und/oder Wasser eingestellt. Zur Unterstützung der Temperaturführung während der Reaktion können auch Kühl- und Heizmedien eingesetzt werden. Weiterhin können Produkt-Edukt-Bereiche mit unterschiedlichen Temperaturen im Reaktionssystem zwecks Wärmeaustausch direkt oder indirekt in Kontakt gebracht werden.

Die Verweilzeiten der obengenannten Edukte in dem früher beschriebenen Reaktorsystem betragen bis zu 600 Minuten. Bevorzugt sind Verweilzeiten von bis zu 180 Minuten. Besonders bevorzugt sind mit steigender Temperatur abnehmende Verweilzeiten. Die Verweilzeit im Reaktorsystem wird vorzugsweise so gewählt, daß eine praktisch vollständige Umsetzung des im Unterschuß eingesetzten Edukts A, bevorzugt MSA, gewährleistet ist. Zur praktisch vollständigen Polymerisation kann es erforderlich sein, das bereits kurz nach der Vermischung in der ersten Reaktionsstrecke, besonders bevorzugt in einem Rohrreaktor, erhaltene Monomeren- und Oligomerengemisch in einer weiteren, oben vorgeschlagenen Vorrichtung, bevorzugt einem Hochviskosreaktor, umzusetzen. Besonders bevorzugt kann jedoch auf einen solchen Hochviskosreaktor verzichtet werden und es gelingt bereits in einem Verweilrohr, bevorzugt in einem Mehrphasenwendelrohr eine vollständige Polymer-Bildung. Die erhaltenen Reaktionsprodukte sind je nach Wasser- bzw. Lösungsmittelgehalt wegen der freiwerdenden Reaktionsenthalpie heiße Lösungen oder lösungsmittelhaltige bzw. wasserhaltige Schmelzen. Die Reaktionsenthalpie kann weitgehend im Reaktor genutzt werden. Dadurch wird eine optimale Wärmeführung mit geringen Invest- und Betriebskosten einer verfahrenstechnischen Anlage erreicht, die zu einer hohen Wirtschaftlichkeit führt.

Beim Einsatz der Oligomer-haltigen Schmelzen in einem Hochviskosreaktor kann die Reaktionsgeschwindigkeit in einer bevorzugten Reaktionsführung im Gegensatz zur ebenfalls möglichen Direktsynthese aus den Zwischenprodukten Maleinsäurediammoniumsalz oder Maleinamidsäureammoniumsalz in einer solchen Vorrichtung durch die bereits vorgeheizten und aufgrund der freigesetzten Reaktionswärme partiell durch Verdampfen an Lösungsmittel verarmte viskose Masse erheblich gesteigert werden. Die Verweilzeit wird durch diese Verfahrensweise gegenüber dem Stand der Technik deutlich gesenkt.

Das Verfahren kann kontinuierlich oder diskontinuierlich durchgeführt werden. Bevorzugte Reaktoren sind Hochviskosreaktoren, z.B. Schnecke, List- und BussReaktor.

Die primären Polymerprodukte können zunächst pulverisiert, dann mit Wasser ausgewaschen werden, wobei das Polysuccinimid zurückbleibt, das in üblicher Weise zur Polyasparaginsäure bzw. zu Salzen z.B. Natriumpolyasparaginsäure beispielsweise hydrolysiert werden kann.

Die primären Polymerisationsprodukte können aber auch durch Umsetzung mit einer Base gegebenenfalls in Gegenwart von Wasser in ein PAS-haltiges Copolymer-Salz überführt werden. Diese Umwandlung von PSI-haltigen in PAS-haltige Copolymere geschieht in einer geeigneten Vorrichtung durch Hydrolyse. Bevorzugt ist dabei ein pH-Wert zwischen 5 und 14 geeignet. In besonders bevorzugter Form wird ein pH-Wert von 7 bis 12 gewählt, insbesondere durch den Zusatz einer Base. Geeignete Basen sind Alkali- und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc. Die Hydrolyse der PSI kann somit teilweise aber auch vollständig erfolgen.

Niedermolekulare Anteile (insbesondere Katalysatorsalze) können aus dieser Lösung durch übliche Membrantechnologie nach Art der Meerwasserentsalzung abgetrennt werden. Sie können aber auch im Produkt verbleiben.

Die Temperatur bei der Hydrolyse liegt geeigneter Weise in einem Bereich einschließlich bis zum Siedepunkt der Succinylgruppen-haltigen Suspension oder Lösung und bevorzugt bei 20 bis 150°C. Die Hydrolyse wird gegebenenfalls unter Druck durchgeführt. Die Hydrolyse wird gegebenenfalls unter Zusatz eines weiteren monoethylenisch ungesättigten Carbonsäurederivates durchgeführt. Geeignet sind beispielsweise Maleinsäureanhydrid, Maleinsäure, Citraconsäure, Itaconsäure, Aconitsäure, Acrylsäure und Fumarsäure.

Unter den basischen Bedingungen der Hydrolyse kann eine Addition der Aminogruppen des N-terminalen Endes des Polymermoleküls an das in der Salzform vorliegende monoethylenisch ungesättigte Carbonsäurederivat stattfinden.

In Abhängigkeit der vorne beschriebenen Polymerisationsbedingungen können die primären Polymerisationsprodukte auch ethylenisch ungesättigte Endgruppen besitzen. Daher kann es sinnvoll sein, dem Reaktionsgemisch während der basischen Hydrolyse gegebenenfalls auch Aminocarbonsäuren, z.B. Glycin, Asparaginsäure, Lysin, Glutaminsäure etc., zuzusetzen. Durch diese Maßnahme wird eine Propfung der Polymerendgruppen erreicht.

Die polymeren freien Säuren lassen sich aus den Salzen aber auch durch kontinuierliche oder diskontinuierliche Ionenaustauscherbehandlung freisetzen.

Die erfindungsgemäß hergestellten Polymere zeichnen sich durch ein verbessertes Calciumbindevermögen aus. Weiterhin zeigen sie Komplexbildungseigenschaften gegenüber Schwermetallen wie z.B. Kupfer, Eisen etc.. Sie können als Zusatz in phosphatarmen und phosphatfreien Wasch- und Reinigungsmitteln verwendet werden. Die Polymerisate sind Builder für Waschmittel und bewirken während des Waschvorgangs eine Verminderung der Inkrustierung und Vergrauung auf dem gewaschenen Textilgut.

Weiterhin irhibieren und verzögern die erfindungsgemäß hergestellten Polyasparaginsäuren die Ausfällung von Calciumcarbonat, Calciumsulfat und Calciumphosphat, aus wäßrigen Lösungen und sind daher als Wasserbehandlungsmittel geeignet. Sie können dem Wasser in Kühlkreisläufen, Verdampfern oder Meerwasserentsalzungsanlagen zugesetzt werden. Außerdem können sie als Belagsverhinderer bei der Eindampfung von Zuckersaft eingesetzt werden.

Aufgrund ihrer komplexbildenden Eigenschaft gegenüber Schwermetallen können die Polymere auch als Stabilisierungsmittel für Bleichmittel wie Wasserstoffperoxid in Bleichprozessen dienen.

### Beispiele

Die primären Polymerisationsprodukte wurden mittels Elementaranalyse charakterisiert. Hierbei wurden neben Kohlenstoff und Wasserstoff noch drei unterschiedliche Stickstoffarten bestimmt. Die Analyse unterschied zwischen ionisch gebundenem Stickstoff (Ammoniumionen), hydrolytisch empfindlichem Stickstoff (z.B. Amid- oder Imid-Stickstoff) und "nicht hydrolysierbarem" Stickstoff (Amin-Stickstoff). Auf diese Weise konnte die für eine verbesserte Wirksamkeit notwendige optimale Hydrolyse verfolgt werden.

Die nach der Hydrolyse erhaltenen erfindungsgemäßen Polymere wurden mit Hilfe von ¹H-NMR und ¹²C-NMR sowohl in der Salzform, als auch nach Überführung in die freie Säure, analysiert. Die Imidodibernsteinsäure-Einheiten wurden anhand der chemischen Verschiebungen von δ1 = 3,8 ppm (¹H-NMR) und δ₂ = 55,5 ppm (¹³C-NMR) für die CH-Gruppen sowie von δ₃ = 2,7 ppm (¹H-NMR) und δ₄ = 36,7 ppm (¹³C-NMR) für die CH₂-Gruppen identifiziert.

Der Restmonomerengehalt wurde durch HPLC und die Polymerverteilung durch GPC gegen Polyacrylate oder Polyasparaginsäuren der Fa. Sigma als Standard bestimmt.

### Beispiel 1

98 g Maleinsäureanhydrid und 53 g Ammoniumcarbonat wurden unter Stickstoff in 2 Stunden bis 160°C erwärmt. Diese Temperatur wurde eine Stunde gehalten. Dann wurde unter Anlegen eines Vakuums weiteres Reaktionswasser entfernt. Anschließend wurde abgekühlt, gegebenenfalls mit Wasser in einem Becherglas mit einem Mixer zerkleinert, abgesaugt, gewaschen und im Vakuum getrocknet. Es wurden 94 g beiges PSI erhalten. Das Molekulargewicht lag bei M_{w} 1665.

Alle weiteren Beispiele nach Tabelle 1 wurden in analoger Weise ausgeführt, wobei jeweils die Katalysatormenge bei etwa 130°C zugegeben und anschließend bis 160, 180, 200 bzw. 240°C aufgeheizt und die Polykondensation durch zweistündiges Nachreagieren bei dieser Temperatur vollzogen wurde. Die gesamte Heizzeit betrug somit 4 Stunden (2 Stunden für die Aufheizphase und 2 weitere Stunden für die Reaktionsphase).

### Beispiel 2

133 g Maleinsäuremonoammoniumsalz werden unter N₂ in 3,75 Stunden bis 180°C erhitzt. Diese Temperatur wird eine Stunde gehalten, dann eine Stunde Vakuum angelegt und unter Vakuum abgekühlt. Das Produkt wird ausgetragen und pulverisiert. Man erhält 90 g PSI mit einem M_{w}-Wert von 2786.

### Beispiel 3

92,5 g Maleinsäuremonoammoniumsalz werden zunächst in 1 Stunde bis 120°C erwärmt, dann gibt man 4 g phosphorige Säure (75 %ig) in 100 ml Wasser zu und steigert die Temperatur in 2,75 Stunden bis 180°C. Es wird eine Stunde bei 180°C gehalten, dann eine Stunde im Vakuum bis 180°C verweilt, im Vakuum abgekühlt, ausgetragen und pulverisiert. Man erhält 67 g helles Pulver mit einem M_{w}-Wert von 3050.

### Beispiel 4

62 g Maleinsäuremonoamid werden in 2 Stunden bis 180°C erwärmt. Es wird eine Stunde bei 180°C gehalten, eine Stunde im Vakuum bis 180°C durchkondensiert, im Vakuum abgekühlt, ausgetragen und pulverisiert. Man erhält 48 g helles Produkt mit einem M_{w}-Wert von 2400.

### Beispiel 5

80 g Maleinsäuremonoamid werden mit 4 g 75 %iger phosphoriger Säure in 100 ml Wasser innerhalb von 2 Stunden bis 180°C erwärmt, wobei das Kondensationswasser abdestilliert. Es wird 1 Stunde bei 180°C gehalten, eine Stunde im Vakuum bei 180°C nachkondensiert, im Vakuum abgekühlt, ausgetragen und pulverisiert. Man erhält 62 g helles Produkt mit einem M_{w}-Wert von 2970.

Analog erhält man mit Methansulfonsäure einen M_{w}-Wert von 3120.

## Patentansprüche

1. Verfahren zur Herstellung von Polymeren mit wiederkehrenden Succinyleinheiten, dadurch gekennzeichnet, daß man das Derivat einer gegebenenfalls substituierten 1,4-Butandicarbonsäure oder Butendicarbonsäure mit Ammoniumcarbonat oder Ammoniumhydrogencarbonat in der Schmelze bei 60 bis 100°C zusammen mit einem Katalysator vermischt, die Temperatur zur Vorreaktion auf 120 bis 145°C steigert, zur Polymerisation die Temperatur bis 300°C erhöht und anschließend das Reaktionswasser entfernt.

2. Verfahren gemaß Anspruch 1, dadurch gekennzeichnet, daß der Katalysator erst nach der Vorreaktion bei 130°C zugegeben wird.

3. Verfahren gemäß der Ansprüche 1 und 2, dadurch gekennzeichnet, daß das Derivat einer gegebenenfalls substituierten 1,4-Butandicarbonsäure oder Butendicarbonsäure mit Ammoniumcarbonat oder Ammoniumhydrogencarbonat in Gegenwart von Kristallwasser vermischt wird.

4. Verfahren gemäß der Ansprüche 1 und 2, dadurch gekennzeichnet, daß man Maleinsäure, Maleinsäureanhydrid, Maleinsäureester, Maleinsäurehalbester, Maleinsäureamid, Maleinsäuremonoamid, Maleinsäureammoniumsalz oder Fumarsäure einsetzt.

5. Verfahren gemäß der Ansprüche 1 bis 3, dadurch gekennzeichnet, daß man Katalysatoren der Reihe Phosphorsäure, phosphorige Säure, Aluminiumoxid, Methansulfonsäure, Phenylphosphonsäure und/oder Phenylphosphonigsäure einsetzt.

6. Verfahren gemäß der Ansprüche 1 bis 5, dadurch gekennzeichnet, daß die Katalysatormenge 0,01 bis 20 g pro Mol Maleinsäureanhydrid beträgt.

7. Verfahren gemäß der Ansprüche 1 bis 6, dadurch gekennzeichnet, daß man Polysuccinimide mit einem mittleren Molekulargewicht MW von 1600 bis 3800 erhält.

8. Verfahren gemäß der Ansprüche 1 bis 7 zur Herstellung von Polyasparaginsäure.
